# EUROPEAN PATENT APPLICATION

(11) **EP 4 239 101 A1**
(43) Date of publication of application: **06.09.2023**
(21) Application number: 21900074.2
(22) Date of filing: 02.12.2021
(51) Int. Cl.: C23G 5/00, C09K 3/14

(54) **NOBLE METAL SURFACE CLEANING PASTE, AND PREPARATION METHOD THEREFOR AND APPLICATION THEREOF**

(30) Priority: 03.12.2020 CN 202011408142
(71) Applicant: Beijing Huaxia Feiyi Xiangyang the Cultural Industry Co., Ltd, Xiangyang, Hubei 441000 (CN)
(72) Inventor: XIONG, Zexi, Hubei 441000 (CN); LIU, Qing, Hubei 441000 (CN)
(74) Representative: Ipside
(86) International application number: PCT/CN2021/135147
(87) International publication number: WO 2022/117048

(57) **Abstract**

A noble metal surface cleaning paste, a preparation method therefor and an application thereof are provided. Raw materials of preparing the cleaning paste include an abrasive, a thickening agent, and water. A weight ratio of the abrasive : the thickening agent : the water is 100: (0.1-5): 100. According to the cleaning paste, by a purely physical method, i.e., friction action between various tiny particles and a noble metal surface, an effect of removing an oxide layer and dirt on the surface is achieved. The cleaning paste does not contain any corrosive chemical component and thus not cause any damage to skin and the surface. The cleaning paste is mainly for cleaning oxidized noble metal surfaces, so that noble metal products that have been oxidized and darkened become glossy again. The cleaning paste is stable in property and can be stored for a long time without affecting its use effect.

## Description

### Technical Field

The disclosure relates to the field of cleaning product technologies, and more particularly to a noble metal surface cleaning paste, a preparation method therefor, and an application thereof.

### Background of the Invention

Gold and silver jewelry are priceless and timeless. For thousands of years, countless people are attracted by their timeless charms. However, if the jewelry are worn improperly, which would cause losing their original charms and affecting their aesthetics. After noble metal jewelry become darkened, it is necessary to clean their surfaces to restore the gloss of the jewelry.

### Summary of the Invention

### Technical problem

A Chinese patent application No. CN 201810296724 (corresponding to patent publication No. CN108468058A) disclosed a silverware brightening powder. Although the silverware brightening powder has good cleaning effect on gold and silver jewelry, the silverware brightening powder will not tightly adhere to a surface of the jewelry during use, and it is not easy to collect and use it again after falling on the ground, so as to cause waste at each time of cleaning.

Aiming at the above problem, the disclosure provides a noble metal surface cleaning paste with good cleaning effect, easy recovery, and stable performance.

### Technical solutions

In order to solve the above technical problem, a first aspect of the disclosure provides a noble metal surface cleaning paste. Raw materials of preparing the cleaning paste include an abrasive, a thickening agent, and water. A weight ratio of the abrasive : the thickening agent : the water is 100: (0.1-5): 100.

The abrasive is at least one of calcium oxalate, plant ash, silica (also referred to as silicon dioxide), titanium dioxide, talc, sodium carbonate, calcium carbonate, attapulgite, sodium sulfate, coconut shell powder, aluminum oxide, calcium bicarbonate, iron oxide, magnesium oxide, chromium oxide, cerium oxide, silicon carbide, and boron carbide.

In an embodiment, the abrasive is at least one of the calcium carbonate, the plant ash, the silica, the titanium dioxide, and the aluminum oxide.

In an embodiment, the abrasive at least includes, by weight, 30-60 parts of the calcium carbonate, 5-30 parts of the plant ash, 5-15 parts of the silica, 0.1-5 parts of the titanium dioxide, and 0.1-5 parts of the aluminum oxide.

In an embodiment, an average grain size of the abrasive is 1-30 microns (µm).

In an embodiment, the thickening agent is at least one of starch, gum acacia, pectin, agar, gelatin, sodium alginate, gamma-carrageenan, dextrin, carboxymethyl cellulose, propylene glycol alginate, methylcellulose, sodium starch phosphate, sodium hydroxymethyl cellulose, sodium alginate, casein, sodium polyacrylate, polyoxyethylene, polyvinylpyrrolidone, guar gum, and carrageenan (e.g., kappa-carrageenan).

In an embodiment, the thickening agent is at least one of the sodium alginate, the sodium hydroxymethyl cellulose, and the sodium starch phosphate.

In an embodiment, the thickening agent is the sodium alginate.

In an embodiment, the weight ratio of the abrasive : the thickening agent : the water is 100: (0.5-1): 100.

A second aspect of the disclosure provides a preparation method of the noble metal surface cleaning paste, and the preparation method includes steps of: mixing the abrasive with the water and stirring evenly; and then adding the thickening agent and stirring evenly again to obtain the noble metal surface cleaning paste.

A third aspect of the disclosure provides an application of the noble metal surface cleaning paste, and the application includes: cleaning a surface of a noble metal product by using the noble metal surface cleaning paste.

### Beneficial effects

According to the noble metal surface cleaning paste of the disclosure, by a purely physical method, i.e., by means of friction displace action between various tiny particles with a noble metal surface, an effect of removing an oxide layer and dirt on the surface can be achieved; the cleaning paste does not contain any corrosive chemical component and thus will not cause any damage to skin and the noble metal surface. The cleaning paste is mainly used for cleaning various oxidized noble metal surfaces, such that noble metal products that have been oxidized and darkened become glossy again. In addition, the cleaning paste according to the disclosure is stable in property, and thus can be stored for a long time without affecting its use effect.

### Detailed Description of Embodiments

The content of the disclosure can be more readily understood by referring to the following detailed description of implementation methods of the disclosure and embodiments included therein. Unless otherwise defined, all technical and scientific terms used in the disclosure have the same meanings as commonly understood by those skilled in the art. The definitions in the specification shall prevail in case of any contradiction.

As used in the disclosure, the terms "prepared by" and "contain" are synonymous. The terms "including", "comprising", "having", "containing" or any other variations thereof used in the disclosure are intended to cover non-exclusive inclusion. For example, a composition, a step, a method, a product, or a device containing elements as listed is not limited to only include the listed elements, and can include other elements not explicitly listed or inherent elements of such composition, step, method, product, or device.

A phrase "consists of" excludes any unspecified element, step, or component. If the phrase is used in one of the appended claims, the phrase will make the claim be a closed claim and exclude a material other than those described, except for conventional impurities related thereto. When the phrase "consists of" appears in a clause of the claim body rather than immediately follows the subject, it merely limits the element described in the clause, and other elements are not excluded from the claim as a whole.

When a quantity, a concentration or other value, or a parameter is expressed as a range, a preferred range, or a range defined by a series of upper-limit preferred value and lower-limit preferred value, it should be understood as specifically disclosing all ranges formed by any pairings of any range upper-limit or preferred value with any range lower-limit or preferred value, regardless of whether the range is separately disclosed. For example, when a range "1 to 5" is disclosed, the range described should be explained as including these ranges "1 to 4", "1 to 3", "1 to 2", "1 to 2 and 4 to 5", "1 to 3 and 5" and the like. When a numerical range is described in the disclosure, unless otherwise stated, the range is intended to include its end value and all integers and fractions within the range.

Singular form includes plural discussed objects, unless the context clearly indicates otherwise. "Optional" or "any one" refers to items or events described thereafter that can occur or do not occur, and the description includes a situation where the event occurs and a situation where the event does not occur.

Approximate terms in the specification and the appended claims are used to modify a quantity, indicating that the disclosure is not limited to the specific quantity, it also includes modified parts that are close and acceptable to the quantity without causing any change to a relevant basic function. Correspondingly, modifying a numerical value with "about", "approximately", and the like means that the disclosure is not limited to the exact numerical value. In some examples, approximate terms may correspond to an accuracy of an instrument for numerical value measurement. In the specification and the appended claims of the disclosure, the range limitations may be combined and/or interchanged, unless otherwise stated, the ranges include all sub-ranges contained within them.

A first aspect of the disclosure provides a noble metal surface cleaning paste, and raw materials of preparing the cleaning paste include: an abrasive, a thickening agent, and water. A weight ratio of the abrasive : the thickening agent : the water is 100: (0.1-5): 100.

### Abrasive

In the disclosure, the abrasive does not have a special limitation.

In an embodiment, the abrasive is at least one of calcium oxalate, plant ash, silica (also referred to as silicon dioxide), titanium dioxide, talc, sodium carbonate, calcium carbonate, attapulgite, sodium sulfate, coconut shell powder, aluminum oxide, calcium bicarbonate, iron oxide, magnesium oxide, chromium oxide, cerium oxide, silicon carbide, and boron carbide.

In an embodiment, the abrasive is at least one of the calcium carbonate, the plant ash, the silica, the titanium dioxide, and the aluminum oxide.

In an embodiment, the abrasive at least includes, by weight, 30-60 parts of the calcium carbonate, 5-30 parts of the plant ash, 5-15 parts of the silica, 0.1-5 parts of the titanium dioxide, and 0.1-5 parts of the aluminum oxide.

In an embodiment, the abrasive at least includes, by weight, 40-60 parts of the calcium carbonate, 5-20 parts of the plant ash, 5-10 parts of the silica, 0.1-2 parts of the titanium dioxide, and 0.1-2 parts of the aluminum oxide.

In an embodiment, the abrasive includes, by weight, 55 parts of the calcium carbonate, 20 parts of the plant ash, 8 parts of the silica, 0.3 parts of the titanium dioxide, and 0.3 parts of the aluminum oxide.

In some embodiments of the disclosure, an average grain size of the abrasive is 1-30 microns (µm).

In an embodiment, the average grain size of the abrasive is 1-10 µm.

### Calcium carbonate

The calcium carbonate is an inorganic compound, a chemical formula of the calcium carbonate is CaCO₃, and the calcium carbonate is commonly known as limestone, stone powder, marble, and the like. The calcium carbonate is neutral, basically insoluble in water and soluble in hydrochloric acid. The calcium carbonate is one of common substances on earth, it exists in aragonite, calcite, chalk, limestone, marble, travertine and other rocks, and it is also a main component of animal bones and shells. And the calcium carbonate is also an important building material with a wide range of industrial applications.

In some embodiments of the disclosure, a grain size of the calcium carbonate is 1-10 µm.

A source of the calcium carbonate does not have a special limitation, commercially available calcium carbonate is suitable for the disclosure, which may be purchased from Zhengzhou Dike Chemical Products Co., Ltd.

### Plant ash

A residue of plants (herbaceous and woody plants) after burning is called plant ash. The plant ash belongs to insoluble substances. The plant ash fertilizer is ash of plants after burning, therefore the plant ash contains almost all mineral elements that plants contain. The plant ash is light and alkaline, the plant ash can easily go with the wind when dry, and with water when wet, moreover, contact between the plant ash and nitrogen fertilizer can easily cause nitrogen volatilization loss.

A main component of the plant ash is potassium carbonate (K₂CO₃), a relative molecular weight of the potassium carbonate is 138. The plant ash fertilizer is the ash of plants after burning, therefore the plant ash contains almost all mineral elements that plants contain. The most abundant of the plant ash fertilizer is potassium, the plant ash fertilizer generally contains 6-12% potassium, and more than 90% of potassium is water-soluble in a form of carbonates. Next is phosphorus, which generally contains 1 .5-3% phosphorus. The plant ash fertilizer also contains trace nutrients such as calcium, magnesium, silicon, sulfur, iron, manganese, copper, zinc, boron, molybdenum, and the like.

In some embodiments of the disclosure, a grain size of the plant ash is 1-10 µm.

In an embodiment, the plant ash at least includes one of magnesium oxide, calcium oxide, iron oxide, potassium oxide and sodium oxide.

A source of the plant ash does not have a special limitation, commercially available plant ash is suitable for the disclosure, which may be purchased from Tianjin Xinying Technology Co., Ltd.

### Silica

The silica is an inorganic compound, a chemical formula of the silica is SiO₂, a long-range orderly arrangement of silicon atoms and oxygen atoms to form crystalline state silica, short-range orderly or long-range disorderly arrangement of silicon atoms and oxygen atoms to form amorphous state silica. In a silica crystal, silicon atoms are located at a center of a regular tetrahedron, four oxygen atoms are located at four top corners of the regular tetrahedron, and many of the regular tetrahedrons are connected by the oxygen atoms at the top corners, each of the oxygen atoms is shared by two regular tetrahedrons, that is, each of the oxygen atoms combines with two silicon atoms. A simplest formula of the silica is SiO₂, however, SiO₂ does not represent one simple molecule (only represents a ratio of numbers of silicon atoms and oxygen atoms in the silica crystal). Pure natural silica crystal is a solid with hard, brittle, insoluble, colorless and transparent, and it is commonly used for manufacturing optical instruments.

In some embodiments of the disclosure, a grain size of the silica is 1-10 µm.

A source of the silica does not have a special limitation, commercially available silica is suitable for the disclosure, which may be purchased from Changwei Natai Chemical Factory in Shouguang City, Shandong Province.

### Titanium dioxide

The titanium dioxide is an inorganic compound, a chemical formula of the titanium dioxide is TiO₂, the titanium dioxide is an amphoteric oxide with a white solid or powder, a molecular weight of the titanium dioxide is 79.9, the titanium dioxide has characteristics of non-toxic, optimal opacity, optimal whiteness and brightness, and it is considered to be a best performing white pigment in the world today. Adhesion of the titanium dioxide is strong and the titanium dioxide is not prone to chemical changes, it is made always snow-white. The titanium dioxide is widely applied in industries such as paints, plastics, papermaking, printing inks, chemical fibers, rubbers, cosmetics and the like. The titanium dioxide has a high melting point, therefore it is also used for manufacturing refractory glasses, glazes, enamels, clays, high-temperature resistant experimental vessels and the like.

In some embodiments of the disclosure, a grain size of the titanium dioxide is 1-10 µm.

A source of the titanium dioxide does not have a special limitation, commercially available titanium dioxide is suitable for the disclosure, which may be purchased from Jinan Shuntai Chemical Raw Materials Co., Ltd.

### Aluminum oxide

The aluminum oxide is an inorganic compound, a chemical formula of the aluminum oxide is Al₂O₃, the aluminum oxide is a high hardness compound, a melting point of the aluminum oxide is 2054 Celsius degree (°C), and a boiling point of the aluminum oxide is 2980°C, the aluminum oxide is an ionizable ionic crystal at high temperatures, and it is commonly used for manufacturing refractories. The aluminum oxide of industry is prepared by bauxite (Al₂O₃•3H₂O) and diaspore, a chemical method is commonly used for preparing Al₂O₃ with high purity requirements. Al₂O₃ has many paramorphs, there are more than 10 known paramorphs, the paramorphs mainly have three crystal forms, that is α-Al₂O₃, β- Al₂O₃, γ- Al₂O₃. The structure and properties are different of the paramorphs, and they are almost completely transformed into α-Al₂O₃ at high temperatures above 1300°C.

In some embodiments of the disclosure, a grain size of the aluminum oxide is 1-10 µm.

A source of the aluminum oxide does not have a special limitation, commercially available aluminum oxide is suitable for the disclosure, which may be purchased from Beijing Gaoke New Materials Technology Co., Ltd.

The inventors have found that the cleaning paste prepared by formulation of calcium carbonate, plant ash, silica, titanium dioxide and aluminum oxide can effectively remove dirt on noble metal surfaces, and the cleaning paste has the effect of maintaining a luster of gold and silver noble metal surfaces. The inventors believed that it may be owing to a special spatial adsorption structure of the abrasive, the abrasive can form a series of complex chemical compositions and interlayer negative charges resulting from the occurrence of displace action. Charges of crystal lattice are basically balanced before the displace action, however, a charge difference is generated after the displace action, so as to make chemical bonds in the crystal and unit layers are prone to become ionic bonds, and make the unit layers have an ability of adsorbing cations, dirts on the noble metal surface have a certain amount of charges, and thus are easily captured by the spatial adsorption structure and thereby are cleared/cleaned.

### Thickening agent

The thickening agent, as known as a gelling agent, is a substance that can increase viscosity of latex and liquid, and as known as a thickener when used for food. The thickening agent can improve viscosity of a material system and make the material system keep at a uniform and stable suspended state or opacified state, or make the material system form a gel. Most of the thickening agents also have emulsification effect.

In some embodiments of the disclosure, the thickening agent is at least one of starch, gum acacia, pectin, agar, gelatin, sodium alginate, gamma-carrageenan, dextrin, carboxymethyl cellulose, propylene glycol alginate, methylcellulose, sodium starch phosphate, sodium hydroxymethyl cellulose, sodium alginate, casein, sodium polyacrylate, polyoxyethylene, polyvinylpyrrolidone, guar gum, and carrageenan (e.g., kappa-carrageenan).

In some embodiments, the thickening agent is at least one of the sodium alginate, the sodium hydroxymethyl cellulose, and the sodium starch phosphate.

In an embodiment, the thickening agent is the sodium alginate.

In some embodiments of the disclosure, the weight ratio of the abrasive : the thickening agent : the water is 100: (0.5-1): 100

The inventors have found during research that: a storage stability of the prepared cleaning paste is best when the sodium alginate is used as a thickening agent in the system, the cleaning paste is let stand for one month, the cleaning paste does not appear a large amount of precipitation phenomenon and stratification phenomenon, and a cleaning effect of the cleaning paste is excellent. The inventors believed a reason may be that the sodium alginate contains a large amount of ester group (-COO-), and the sodium alginate can exhibit polyanion behavior in aqueous solutions, it has a certain degree of adhesion and can form a gel, so as to improve a stability of the cleaning paste. Particularly, when the system contains divalent cations such as calcium ion (Ca²⁺), an ion exchange reaction occurred between sodium ion (Na⁺) of the sodium alginate and divalent cation, and alginate radicals are cumulated to form a crosslinked network structure, so as to further improve the stability of the cleaning paste. However, an amount of the sodium alginate has a direct impact on the cleaning effect, the sodium alginate cannot form a stable paste if the amount is too small; whereas when a proportion of the sodium alginate is too large, the cleaning paste will become very thick and tend to be gel-like substance, a surface of the cleaning paste is caused to be excessive smoothness, a significant portion of friction from the abrasive is lost during use, tiny particles cannot directly contact a surface of jewelry and are trapped inside the gel-like substance, dirt and an oxide layer on the surface of the jewelry cannot be removed through the frictional displace action of external forces, and the cleaning effect is degraded consequently.

### Water

In the disclosure, the water does not have a special limitation, and may be deionized water or distilled water.

A second aspect of the disclosure provides a preparation method of the noble metal surface cleaning paste, and the preparation method includes steps of: mixing the abrasive with the water and stirring evenly; and then adding the thickening agent and stirring evenly again to obtain the noble metal surface cleaning paste.

A third aspect of the disclosure provides an application of the noble metal surface cleaning paste, and the application includes: cleaning a surface of a noble metal product by using the noble metal surface cleaning paste.

The following is a specific description of the disclosure through several embodiments. It is noted that the following embodiments are merely for further description of the disclosure and cannot be understood as a limitation of a scope of protection of the disclosure. Some non-essential improvements and adjustments made by those skilled in the art based on illustrated contents of the disclosure still fall within the scope of protection of the disclosure.

### Embodiments

### Embodiment 1

The embodiment 1 provides a noble metal surface cleaning paste, the raw materials of preparing the cleaning paste include an abrasive, a thickening agent, and water; and a weight ratio of the abrasive : the thickening agent : the water is 100: 0.7: 100.

The abrasive includes, by weight, 55 parts of the calcium carbonate, 20 parts of the plant ash, 8 parts of the silica, 0.3 parts of the titanium dioxide, and 0.3 parts of the aluminum oxide. The calcium carbonate has a grain size of 5 µm, and is purchased from Zhengzhou Dike Chemical Products Co., Ltd. The plant ash has a grain size of 5 µm, and is purchased from Tianjin Xinying Technology Co., Ltd. The silica has a grain size of 5 µm, and is purchased from Changwei Natai Chemical Factory in Shouguang City, Shandong Province. The titanium dioxide has a grain size of 5 µm, and is purchased from Jinan Shuntai Chemical Raw Materials Co., Ltd. The aluminum oxide has a grain size of 5 µm, and is purchased from Beijing Gaoke New Materials Technology Co., Ltd. The thickening agent is the sodium alginate.

A preparation method for the noble metal surface cleaning paste, includes the following steps. In particular, the abrasive and the water are mixed and stirred evenly, and then the thickening agent is added and stirring evenly is performed again, such that the noble metal surface cleaning paste is prepared consequently.

### Embodiment 2

The embodiment 2 provides a noble metal surface cleaning paste, the raw materials of preparing the cleaning paste include an abrasive, a thickening agent, and water; and a weight ratio of the abrasive : the thickening agent : the water is 100: 0.1: 100.

The abrasive includes, by weight, 30 parts of the calcium carbonate, 5 parts of the plant ash, 5 parts of the silica, 0.1 parts of the titanium dioxide, and 0.1 parts of the aluminum oxide. The calcium carbonate has a grain size of 1 µm, and is purchased from Zhengzhou Dike Chemical Products Co., Ltd. The plant ash has a grain size of 5 µm, and is purchased from Tianjin Xinying Technology Co., Ltd. The silica has a grain size of 5 µm, and is purchased from Changwei Natai Chemical Factory in Shouguang City, Shandong Province. The titanium dioxide has a grain size of 5 µm, and is purchased from Jinan Shuntai Chemical Raw Materials Co., Ltd. The aluminum oxide has a grain size of 5 µm, and is purchased from Beijing Gaoke New Materials Technology Co., Ltd. The thickening agent is the sodium alginate.

A preparation method for the noble metal surface cleaning paste, includes the following steps. In particular, the abrasive and the water are mixed and stirred evenly, and then the thickening agent is added and stirring evenly is performed again, such that the noble metal surface cleaning paste is prepared consequently

### Embodiment 3

The embodiment 3 provides a noble metal surface cleaning paste, the raw materials of preparing the cleaning paste include an abrasive, a thickening agent, and water; and a weight ratio of the abrasive : the thickening agent : the water is 100: 5: 100.

The abrasive includes, by weight, 60 parts of the calcium carbonate, 30 parts of the plant ash, 15 parts of the silica, 5 parts of the titanium dioxide, and 5 parts of the aluminum oxide. The calcium carbonate has a grain size of 5 µm, and is purchased from Zhengzhou Dike Chemical Products Co., Ltd. The plant ash has a grain size of 5 µm, and is purchased from Tianjin Xinying Technology Co., Ltd. The silica has a grain size of 5 µm, and is purchased from Changwei Natai Chemical Factory in Shouguang City, Shandong Province. The titanium dioxide has a grain size of 5 µm, and is purchased from Jinan Shuntai Chemical Raw Materials Co., Ltd. The aluminum oxide has a grain size of 5 µm, and is purchased from Beijing Gaoke New Materials Technology Co., Ltd. The thickening agent is the sodium alginate.

A preparation method for the noble metal surface cleaning paste, includes the following steps. In particular, the abrasive and the water are mixed and stirred evenly, and then the thickening agent is added and stirring evenly is performed again, such that the noble metal surface cleaning paste is prepared consequently.

### Embodiment 4

The embodiment 4 provides a noble metal surface cleaning paste, the raw materials of preparing the cleaning paste include an abrasive, a thickening agent, and water; and a weight ratio of the abrasive : the thickening agent : the water is 100: 0.7: 100.

The abrasive includes, by weight, 40 parts of the calcium carbonate, 10 parts of the plant ash, 8 parts of the silica, 2 parts of the titanium dioxide, and 2 parts of the aluminum oxide. The calcium carbonate has a grain size of 5 µm, and is purchased from Zhengzhou Dike Chemical Products Co., Ltd. The plant ash has a grain size of 5 µm, and is purchased from Tianjin Xinying Technology Co., Ltd. The silica has a grain size of 5 µm, and is purchased from Changwei Natai Chemical Factory in Shouguang City, Shandong Province. The titanium dioxide has a grain size of 5 µm, and is purchased from Jinan Shuntai Chemical Raw Materials Co., Ltd. The aluminum oxide has a grain size of 5 µm, and is purchased from Beijing Gaoke New Materials Technology Co., Ltd. The thickening agent is stearyl alcohol.

A preparation method for the noble metal surface cleaning paste, includes the following steps. In particular, the abrasive and the water are mixed and stirred evenly, and then the thickening agent is added and stirring evenly is performed again, such that the noble metal surface cleaning paste is prepared consequently.

### Embodiment 5

The embodiment 5 provides a noble metal surface cleaning paste, the raw materials of preparing the cleaning paste include an abrasive, a thickening agent, and water; and a weight ratio of the abrasive : the thickening agent : the water is 100: 0.7: 100.

The abrasive includes, by weight, 40 parts of the calcium carbonate, 10 parts of the plant ash, 8 parts of the silica, 2 parts of the titanium dioxide, and 2 parts of the aluminum oxide. The calcium carbonate has a grain size of 5 µm, and is purchased from Zhengzhou Dike Chemical Products Co., Ltd. The plant ash has a grain size of 5 µm, and is purchased from Tianjin Xinying Technology Co., Ltd. The silica has a grain size of 5 µm, and is purchased from Changwei Natai Chemical Factory in Shouguang City, Shandong Province. The titanium dioxide has a grain size of 5 µm, and is purchased from Jinan Shuntai Chemical Raw Materials Co., Ltd. The aluminum oxide has a grain size of 5 µm, and is purchased from Beijing Gaoke New Materials Technology Co., Ltd. The thickening agent is sodium chloride.

A preparation method for the noble metal surface cleaning paste, includes the following steps. In particular, the abrasive and the water are mixed and stirred evenly, and then the thickening agent is added and stirring evenly is performed again, such that the noble metal surface cleaning paste is prepared consequently.

### Embodiment 6

The embodiment 6 provides a noble metal surface cleaning paste, the raw materials of preparing the cleaning paste include an abrasive, a thickening agent, and water; and a weight ratio of the abrasive : the thickening agent : the water is 100: 10: 100.

The abrasive includes, by weight, 40 parts of the calcium carbonate, 10 parts of the plant ash, 8 parts of the silica, 2 parts of the titanium dioxide, and 2 parts of the aluminum oxide. The calcium carbonate has a grain size of 5 µm, and is purchased from Zhengzhou Dike Chemical Products Co., Ltd. The plant ash has a grain size of 5 µm, and is purchased from Tianjin Xinying Technology Co., Ltd. The silica has a grain size of 5 µm, and is purchased from Changwei Natai Chemical Factory in Shouguang City, Shandong Province. The titanium dioxide has a grain size of 5 µm, and is purchased from Jinan Shuntai Chemical Raw Materials Co., Ltd. The aluminum oxide has a grain size of 5 µm, and is purchased from Beijing Gaoke New Materials Technology Co., Ltd. The thickening agent is sodium chloride.

A preparation method for the noble metal surface cleaning paste, includes the following steps. In particular, the abrasive and the water are mixed and stirred evenly, and then the thickening agent is added and stirring evenly is performed again, such that the noble metal surface cleaning paste is prepared consequently.

### Embodiment 7

The embodiment 7 provides a noble metal surface cleaning paste, the raw materials of preparing the cleaning paste include an abrasive, a thickening agent, and water; and a weight ratio of the abrasive : the thickening agent : the water is 100: 0.01: 100.

The abrasive includes, by weight, 40 parts of the calcium carbonate, 10 parts of the plant ash, 8 parts of the silica, 2 parts of the titanium dioxide, and 2 parts of the aluminum oxide. The calcium carbonate has a grain size of 5 µm, and is purchased from Zhengzhou Dike Chemical Products Co., Ltd. The plant ash has a grain size of 5 µm, and is purchased from Tianjin Xinying Technology Co., Ltd. The silica has a grain size of 5 µm, and is purchased from Changwei Natai Chemical Factory in Shouguang City, Shandong Province. The titanium dioxide has a grain size of 5 µm, and is purchased from Jinan Shuntai Chemical Raw Materials Co., Ltd. The aluminum oxide has a grain size of 5 µm, and is purchased from Beijing Gaoke New Materials Technology Co., Ltd. The thickening agent is sodium chloride.

A preparation method for the noble metal surface cleaning paste, includes the following steps. In particular, the abrasive and the water are mixed and stirred evenly, and then the thickening agent is added and stirring evenly is performed again, such that the noble metal surface cleaning paste is prepared consequently.

### Embodiment 8

The embodiment 8 provides a noble metal surface cleaning paste, the raw materials of preparing the cleaning paste include an abrasive, a thickening agent, and water; and a weight ratio of the abrasive : the thickening agent : the water is 100: 0.7: 100.

The abrasive includes, by weight, 40 parts of the calcium carbonate, 8 parts of the silica, 2 parts of the titanium dioxide, and 2 parts of the aluminum oxide. The calcium carbonate has a grain size of 5 µm, and is purchased from Zhengzhou Dike Chemical Products Co., Ltd. The plant ash has a grain size of 5 µm, and is purchased from Tianjin Xinying Technology Co., Ltd. The silica has a grain size of 5 µm, and is purchased from Changwei Natai Chemical Factory in Shouguang City, Shandong Province. The titanium dioxide has a grain size of 5 µm, and is purchased from Jinan Shuntai Chemical Raw Materials Co., Ltd. The aluminum oxide has a grain size of 5 µm, and is purchased from Beijing Gaoke New Materials Technology Co., Ltd. The thickening agent is sodium chloride.

A preparation method for the noble metal surface cleaning paste, includes the following steps. In particular, the abrasive and the water are mixed and stirred evenly, and then the thickening agent is added and stirring evenly is performed again, such that the noble metal surface cleaning paste is prepared consequently.

### Performance testing

1. A cleaning effect testing is as follows. the cleaning pastes of small amounts prepared from the above embodiments were taken for cleaning oxidized and blackened silver jewelry, the taken cleaning pastes then were respectively coated on surfaces of the silver jewelry, the surfaces of the silver jewelry subsequently were gently scrubbed by respective sponges or toothbrushes, the surfaces of the silver jewelry then were rinsed with clean water after repeatedly scrubbing. The cleaning effect is considered as excellent if the surface of the silver jewelry is shiny and the black oxide layer disappears, whereas, the cleaning effect is considered as ordinary (i.e., not excellent).
2. A stability testing is as follows. The cleaning pastes prepared from the above embodiments were let stand for one month in respective closed containers, and a character of each of the cleaning pastes was observed. The stability is considered as excellent if the character is maintained to be basically unchanged (e.g., a small amount of precipitations are allowed, but do not affect its use after stirring). The stability is considered as ordinary if the cleaning paste produces a large amount of precipitation phenomenon or stratification phenomenon.

Testing results of the embodiments are shown in Table 1.

**Table. 1 Testing results of the embodiments.**

| Embodiment | Cleaning effect | Stability |
|---|---|---|
| Embodiment 1 | Excellent | Excellent |
| Embodiment 2 | Excellent | Excellent |
| Embodiment 3 | Excellent | Excellent |
| Embodiment 4 | Excellent | Ordinary |
| Embodiment 5 | Excellent | Ordinary |
| Embodiment 6 | Ordinary | Excellent |
| Embodiment 7 | Excellent | Ordinary |
| Embodiment 8 | Ordinary | Excellent |

The above embodiments are merely illustrative and used to explain some features of the method described in the disclosure. The appended claims are intended to claim a conceivable scope as broad as possible, and the embodiments presented in this specification are merely a description of chosen implementations from a combination of all possible embodiments. Therefore, the applicant's intention is that the appended claims are not limited by chosen examples that illustrate features of the disclosure. Some numerical ranges used in the appended claims also include sub-ranges within them, and changes within these ranges should be construed as being covered by the appended claims where possible.

## Claims

1. A noble metal surface cleaning paste, wherein raw materials of preparing the cleaning paste comprise an abrasive, a thickening agent, and water; a weight ratio of the abrasive : the thickening agent : the water is 100: (0.1-5): 100;
wherein the abrasive is at least one selected from the group consisting of calcium oxalate, plant ash, silica, titanium dioxide, talc, sodium carbonate, calcium carbonate, attapulgite, sodium sulfate, coconut shell powder, aluminum oxide, calcium bicarbonate, iron oxide, magnesium oxide, chromium oxide, cerium oxide, silicon carbide, and boron carbide.

2. The noble metal surface cleaning paste as claimed in claim 1, wherein the abrasive is at least one selected from the group consisting of the calcium carbonate, the plant ash, silica, the titanium dioxide, and the aluminum oxide.

3. The noble metal surface cleaning paste as claimed in claim 2, wherein the abrasive at least comprises, by weight, 30-60 parts of the calcium carbonate, 5-30 parts of the plant ash, 5-15 parts of the silica, 0.1-5 parts of the titanium dioxide, and the 0.1-5 parts of the aluminum oxide.

4. The noble metal surface cleaning paste as claimed in claim 3, wherein an average grain size of the abrasive is 1-30 microns (µm).

5. The noble metal surface cleaning paste as claimed in claim 1, wherein the thickening agent is at least one selected from the group consisting of starch, gum acacia, pectin, agar, gelatin, sodium alginate, gamma-carrageenan, dextrin, carboxymethyl cellulose, propylene glycol alginate, methylcellulose, sodium starch phosphate, sodium hydroxymethyl cellulose, sodium alginate, casein, sodium polyacrylate, polyoxyethylene, polyvinylpyrrolidone, guar gum, and carrageenan.

6. The noble metal surface cleaning paste as claimed in claim 5, wherein the thickening agent is at least one selected from the group consisting of the sodium alginate, the sodium hydroxymethyl cellulose, and the sodium starch phosphate.

7. The noble metal surface cleaning paste as claimed in claim 6, wherein the thickening agent is the sodium alginate.

8. The noble metal surface cleaning paste as claimed in claim 1, wherein the weight ratio of the abrasive : the thickening agent : the water is 100: (0.5-1): 100.

9. A preparation method of the noble metal surface cleaning paste as claimed in any one of claims 1 to 8, comprising:
mixing the abrasive with the water and stirring evenly; and, then adding the thickening agent and stirring evenly again to obtain the noble metal surface cleaning paste.

10. A application of the noble metal surface cleaning paste as claimed in any one of claims 1 to 8, comprising:
cleaning a surface of a noble metal product by using the noble metal surface cleaning paste.
